# EUROPEAN PATENT APPLICATION

(11) **EP 1 617 654 A1**
(43) Date of publication of application: **18.01.2006**
(21) Application number: 05105128.2
(22) Date of filing: 10.06.2005
(51) Int. Cl.: H04N 5/238, G03B 9/02

(54) **Imaging apparatus with aperture control for avoiding diffraction**

(30) Priority: 12.07.2004 KR 2004053979
(71) Applicant: SAMSUNG ELECTRONICS CO., LTD., Suwon-si Gyeonggi-do 442-742 (KR)
(72) Inventor: KWON, Su-hyog, Gweonseon-gu Suwon-si Gyeonggi-do (KR)
(74) Representative: Geary, Stuart Lloyd

(57) **Abstract**

An iris controlling method and apparatus for improving definition of a bright object, wherein the photographing apparatus includes an iris, a controlling unit for establishing a shutting level of the iris based on a brightness level of a photographed object and which is capable of limiting the iris shutting level to be less than a predetermined shutting level which is lower than the maximum shutting level of the iris, and an iris operating unit for controlling the shutting extent of the iris based on the iris shutting level established in the controlling unit. Accordingly, degradation of the definition of the object is prevented even though the photographed object is very bright.

## Description

The present invention relates to an imaging appratus having aperture-setting means and an aperture control means for controlling the aperture-setting means.

Image capturing devices such as camcorders have an iris for controlling the amount olight that is incident on the image sensor.

The amount of light incident on the image sensor can be controlled automatically by automatically controlling the aperture of the iris. This is known as "Auto Iris" (AI) or "Auto Exposure" (AE). More specificically, "AI" involves widening the aperture of the iris when the light level falls and narrowing the aperture when the light level increases.

Accordingly, when light level is very high, the iris is stopped down to its maximum level. However, if the iris is stopped dowb to the maximum level, undesirable diffraction effects occur.

An imaging aparatus, according to the present invention, is characterised in that the aperture control means is configured such that the minimum settable aperture is limited to be larger than the minimum aperture of which the aperture-setting means is capable so as to reduce or prevent diffraction effects that would occur if the minimum aperture were not so limited.

Preferred and optional features of the present invention are set forth in claims 2 to 14 appended hereto.

Embodiments of the present invention will now be described, by way of example, with reference to the accompanying drawings, in which:
Figure 1 is a block diagram illustrating an imaging apparatus according to the present invention;
Figure 2 is a flowchart illustrating an iris control method according to the present invention; and
Figure 3 is a flowchart illustrating another iris control method according to the present invention.

Functions and constructions that are well-known to those skilled in the art are omitted for clarity and conciseness.

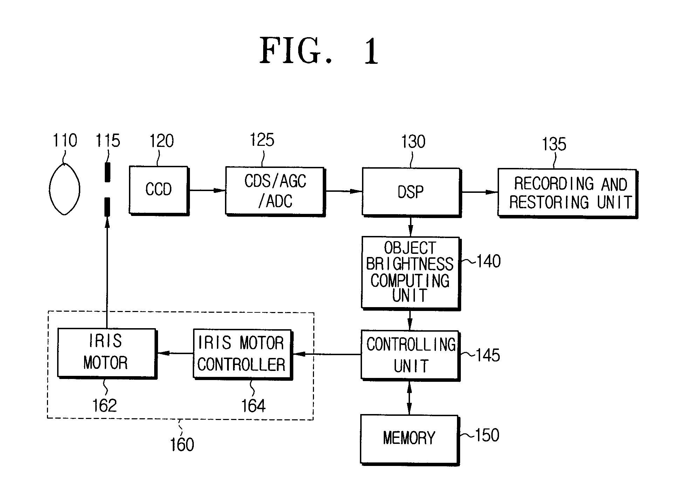

Referring to Figure 1, an imaging apparatus comprises a lens 110, an iris 115, a charge-coupled device (CCD) 120, a Correlated Double Sampling Circuit/Automatic Gain Controlling Circuit/Analog to Digital Converter (CDS/AGC/ADC) 125, a digital signal processor (DSP) 130, a recording and playback unit 135, an object brightness computing unit 140, a controlling unit 145, a memory 150 and an iris operating unit 160. The iris operating unit 160 is provided with an iris motor 162 and an iris motor controller 164.

The lens 110 focuses an optical image of an object (not shown) onto the CCD 120. The size of the aperture of the iris 115 is controlled by the iris operating unit 160, which is described in greater detail below, and the quantity of light entering the CCD 120 is determined by the size of the aperture of the iris 115. The CCD 120 converts the optical image of the object into electric signals and outputs the electric signals.

The image pickup device may comprising a Metal Oxide Semiconductor (MOS) device rather than the CCD 120 shown in Figure 1.

The CDS/AGC/ADC 125 removes noise from the output signal of the CCD 120 using a correlated double sampling circuit (CDS), controls gain to maintain the signal at a predetermined level using an automatic gain controlling circuit (AGC) and converts the signal into a digital video signal using an analogue-to-digital converter (ADC). The DSP 130 processes the video signal, output from the CDS/AGC/ADC 125, and supplies the processed video signal to the recording and playback unit 135. The recording and playback unit 135 displays the processed video signal on a display, such as Liquid Crystal Display (LCD) (not shown), or records it on a recording medium (not shown) after compressing the processed video signal into a predetermined format.

The DSP 130 also supplies a luminance Y signal, which is separated from the video signal during the signal processing, to the object brightness computing unit 140. The object brightness computing unit 140 computes the brightness level of the object, based on the luminance signal provided from the DSP 130.

The controlling unit 145 generally controls the operation of the photographing apparatus. More particularly, the controlling unit 145 controls the size of the aperture of the iris 115. To control the size of the aperture of the iris 115, the controlling unit 145 computes the shutting level (equivalent to f number) of the iris 115, based on the object brightness level computed in the object brightness computing unit 140, and provides the computed iris shutting level to the iris operating unit 160.

The controlling unit 145 can further limit the iris shutting level to be less than a predetermined level to prevent a phenomenon wherein the definition of the object is deteriorated when the object is very bright as described in greater detail below.

The iris operating unit 160 controls the shutting level of the iris 115 based on the iris shutting level provided from the controlling unit 145. Specifically, when the iris motor controller 164 operates the iris motor 162, based on the iris shutting level provided from the controlling unit 145, the shutting degree of the iris 115 is controlled on the basis of the operation of the iris motor 162.

The memory 150 is a recording medium provided for storing data needed by the controlling unit 145 for operating and/or controlling the imaging apparatus. More particularly, the memory 150 stores data required for the controlling unit 145 to control and/or limit the shutting extent of the iris 115.

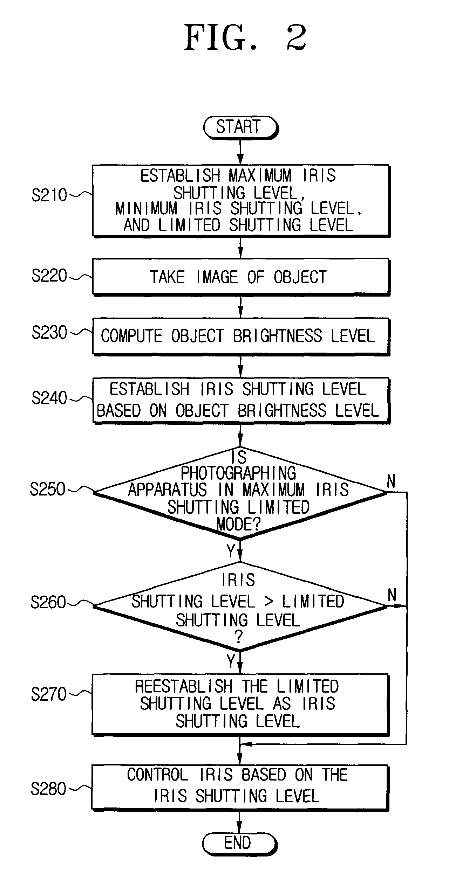

An exemplary method of automatically controlling the aperture of the iris 115 of the imaging apparatus of Figure 1 and, thereby, maintaining the definition of the object at a good level, even through the object is very bright, will now be described in greater detail with reference to Figure 2.

Referring to Figure 2, when power is supplied to the imaging apparatus, the controlling unit 145 sets up data needed for operating and/or controlling the imaging apparatus. At step S210, the controlling unit 145 establishes the 'maximum iris shutting level', 'minimum iris shutting level' and 'limited shutting level', which are required for operating and/or controlling the iris 115. Specifically, the controlling unit 145 sets up the maximum iris shutting level (smallest aperture) and the minimum iris shutting level (largest aperture), and then sets up the limited shutting level based on the previously established maximum iris shutting level. The maximum iris shutting level, minimum iris shutting level and limited shutting level are then stored in the memory 150.

The maximum iris shutting level is stored as control data for maximizing the shutting level of the iris 115, i.e. control data for shutting the iris 115 to the maximum level. The minimum iris shutting level is stored as control data for minimizing the shutting level of the iris 115, i.e. control data for opening the iris 115 to the maximum level. The limited shutting level is lower than the maximum iris shutting level by a predetermined amount and it is stored as control data for making the shutting level of the iris 115 lower than the maximum iris shutting level.

Subsequently, at step S220, if a user inputs an image capture command, an image of an object is taken by the CCD 120. Specifically, when the image is taken, the CCD 120 converts the optical image of the object in an electric signal which it outputs. The CDS/AGC/ADC 125 and the DSP 130 then processes the output signal of the CCD 120 to obtain a video signal. The DSP 130 also provides a luminance signal, which is separated from the video signal during the signal processing and provided to the object brightness computing unit 140.

At step S230, the object brightness computing unit 140 computes the brightness level of the object, on the basis of the luminance signal, provided from the DSP 130 to obtain an object brightness level. The object brightness computing unit 140 then provides the object brightness level to the controlling unit 145.

At step S240, the controlling unit 145 establishes an iris shutting level, on the basis of the object brightness level which was obtained at the step S230.

Subsequently, at step S250, the controlling unit 145 determines whether the imaging apparatus is in a 'maximum iris shutting limited' mode. If the imaging apparatus is in the 'maximum iris shutting limited' mode, the controlling unit 145 then determines at step S260 whether the iris shutting level which was established at step S240, exceeds the limited shutting level which was set up at step S210.

The maximum iris shutting limited mode denotes an imaging apparatus operation mode that prevents definition of the object from being degraded by limiting and preventing the iris from being shut to the maximum level, even when the object is very bright. The maximum iris shutting limited mode can be optionally set up or cancelled by the user.

If it is determined that the photographing apparatus is in the maximum iris shutting limited mode at step S250 and that the iris shutting level exceeds the limited shutting level at step S260, the controlling unit 145 re-establishes the iris shutting level such that the limited shutting level is the re-established iris shutting level at step S270.

If the iris shutting level is re-established with the limited shutting level, the iris 115 is not shut to the maximum level, but is shut to a level that is less than the maximum shutting level. Since the iris 115 is not shut to the maximum level, the diffraction phenomenon of incident light is not maximized and, thus, the definition of the captured image is not degraded.

However, if it is determined that the imaging apparatus is not in the maximum iris shutting limited mode at step S250 or, if it is determined that the iris shutting level does not exceed the limited shutting level at step S260, the controlling unit 145 does not perform the process of step S270. Therefore, the iris shutting level established in step S240 is maintained.

Subsequently, at step S280, the iris operating unit 160 controls the shutting level of the iris 115 on the basis of the iris shutting level, established in step S240 or S270. To be specific, when the iris motor controller 164 operates the iris motor 162 on the basis of the iris shutting level, provided from the controlling unit 145, the shutting level of the iris 115 is controlled on the basis of the operation of the iris motor 162.

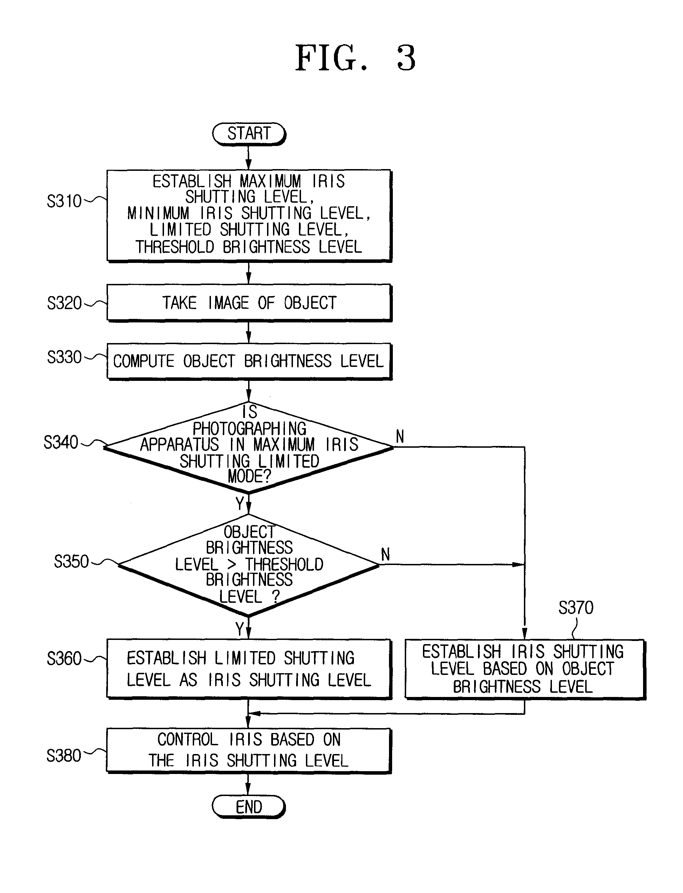

Another iris controlling method that can maintain the definition of the object at a regular level, even though the object is very bright, will now be described with reference to Figure 3.

Referring to Figure 3, at step S310, the controlling unit 145 sets up the 'maximum iris shutting level', 'minimum iris shutting level', 'limited shutting level' and 'threshold brightness level', which are used for operating and/or controlling the iris 115.

The threshold brightness level is the brightness level at which the diffraction phenomenon of incident light is maximized and the definition of the captured image is degraded, and which can occur when the iris shutting level is established on the basis of the brightness level of the object. The threshold brightness level can be established by reference to the limited shutting level.

Subsequently, at step S320, if the user inputs an image capture command, an image of the object is taken by the CCD 120. Then, at step S330, the object brightness computing unit 140 computes the brightness level of the object based on the luminance signal provided from the DSP 130.

At step S340, the controlling unit 145 determines whether the imaging apparatus is in the maximum iris shutting limited mode. If the imaging apparatus is in the maximum iris shutting limited mode, the controlling unit 145 then determines at step S350 whether the object brightness level which is computed at step S330, exceeds the threshold brightness level, which was set up at step S310.

If it is determined that the imaging apparatus is in the maximum iris shutting limited mode at step S340 and that the object brightness level exceeds the threshold brightness level at step S350, the controlling unit 145 establishes the limited shutting level as the iris shutting level at step S360.

However, if it is determined that the imaging apparatus is not in the maximum iris shutting limited mode at step S340 or that the object brightness level does not exceed the threshold brightness level at step S350, the controlling unit 145 establishes the iris shutting level at step S370 on the basis of the object brightness level computed at step S330.

Subsequently, at step S380, the iris operating unit 160 controls the shutting level of the iris 115 on the basis of the iris shutting level established in step S360 or S370.

In the light of the foregoing, an iris controlling method and apparatus can maintain the definition of an image of an object at an acceptable level even though the object is very bright. The exemplary embodiments of the present invention can be applied to any number of devices, such as digital cameras, digital camcorders, monitoring cameras such as closed-circuit television (CCTV) cameras, cameras mounted on mobile terminals and other imaging devices.

As described above, the exemplary embodiments of the present invention can prevent the maximum shutting of the iris in cases wherein the object is very bright. Since the iris is not shut to the maximum level, even though the object is very bright, the diffraction phenomenon of incident light is not maximized. Therefore, the definition of the photographed object is not degraded.

## Claims

1. An imaging appratus having aperture-setting means (115) and an aperture control means (140, 145, 162, 164) for controlling the aperture-setting means (115), **characterised in that** the aperture control means (140, 145, 162, 164) is configured such that the minimum settable aperture is limited to be larger than the minimum aperture of which the aperture-setting means (115) is capable so as to reduce or prevent diffraction effects that would occur if the minimum aperture were not so limited.

2. An apparatus according to claim 1, wherein the aperture-setting means (115) comprises an iris.

3. An apparatus according to claim 1 or 2, including light level sensing means (120), wherein the control means (140, 145, 162, 164) is responsive to the output of the light level sensing means (120) to control the aperture setting means (115).

4. An apparatus according to claim 3, wherein the light level sensing means is the image sensor (120) of the apparatus.

5. A photographing apparatus, comprising:
an iris;
a controlling unit for establishing an iris shutting level based on a brightness level of a photographed object, wherein the controlling unit is configured to limit the iris shutting level to be less than a predetermined shutting level which is lower than a maximum shutting level of the iris; and
an iris operating unit for controlling the shutting of the iris based on the iris shutting level established by the controlling unit.

6. The photographing apparatus as recited in claim 5, wherein the controlling unit is further configured to re-establish the iris shutting level if the iris shutting level established based on the brightness level of the object exceeds the predetermined shutting level, wherein the controlling unit re-establishes the iris shutting level such that the predetermined shutting level is the re-established iris shutting level.

7. The photographing apparatus as recited in claim 5, wherein the controlling unit is further configured to establish the predetermined shutting level as the iris shutting level if the brightness level of the object exceeds a predetermined brightness level.

8. The photographing apparatus as recited in claim 5, wherein the controlling unit is further configured to limit the iris shutting level to be less than the predetermined shutting level if the photographing apparatus is in a 'maximum iris shutting limited mode' for preventing the iris from being shut to a maximum level.

9. The photographing apparatus as recited in claim 5, wherein the iris is configured to be mounted on any one of a device selected from the group consisting of a digital camera, a digital camcorder, a monitoring camera, and a camera for a mobile terminal.

10. A method for controlling an iris of a photographing apparatus, comprising the steps of:
computing a brightness level of a photographed object;
establishing an iris shutting level based on the brightness level of the object and limiting the iris shutting level to be less than a predetermined shutting level which is lower than a maximum shutting level of the iris; and
controlling the shutting of the iris based on the established iris shutting level.

11. The method as recited in claim 10, wherein the establishing step further comprises the step of:
re-establishing the iris shutting level such that the predetermined shutting level is the re-established iris shutting level if the iris shutting level established based on the brightness level of the object exceeds the predetermined shutting level.

12. The method as recited in claim 10, wherein the establishing step further comprises the step of:
establishing the predetermined shutting level as the iris shutting level if the brightness level of the object exceeds a predetermined brightness level.

13. The method as recited in claim 10, wherein the establishing step further comprises the step of:
limiting the iris shutting level to be less than the predetermined shutting level if the photographing apparatus is in a 'maximum iris shutting limited mode' for preventing the iris from being shut to a maximum level.

14. The method as recited in claim 10, wherein the photographing apparatus is any one of a device selected from the group consisting of a digital camera, a digital camcorder, a monitoring camera, and a camera for a mobile terminal.
